# EUROPÄISCHE PATENTSCHRIFT

(11) **EP 3 033 263 B1**
(45) Veröffentlichungstag und Bekanntmachung des Hinweises auf die Patenterteilung: **09.05.2018**
(21) Anmeldenummer: 14752834.3
(22) Anmeldetag: 14.08.2014
(51) Int. Cl.: B62D 21/09, B62D 27/06, F16B 33/00, F16B 5/02

(54) **GEHÄUSE ZUM AUFNEHMEN VON GEGENSTÄNDEN**
HOUSING FOR ACCOMMODATING OBJECTS
BOÎTIER DESTINÉ À RECEVOIR DES OBJETS

(30) Priorität: 15.08.2013 DE 102013216249
(43) Veröffentlichungstag der Anmeldung: 22.06.2016
(73) Patentinhaber: Bombardier Transportation GmbH, 10785 Berlin (DE)
(72) Erfinder: ZENGERLE, Manfred, 67280 Ebertsheim (DE)
(74) Vertreter: Brunotte, Joachim Wilhelm Eberhard
(86) Internationale Anmeldenummer: PCT/EP2014/067389
(87) Internationale Veröffentlichungsnummer: WO 2015/022389

(56) Entgegenhaltungen:
- EP-A1- 2 187 070
- EP-A2- 0 841 240
- WO-A1-2013/080340
- FR-A1- 2 859 451

## Beschreibung

Die Erfindung betrifft ein Gehäuse zum Aufnehmen von Gegenständen, wobei das Gehäuse ein Gehäuse-Unterteil, einen Gehäusedeckel und zumindest eine Dichtung zum Abdichten des Gehäuses gegen ein Eindringen von Schmutz, Feuchtigkeit und Flüssigkeit aufweist. Die Erfindung betrifft ferner ein Verfahren zum Aufnehmen von Gegenständen in ein derartiges Gehäuse. Bei der Ausführung des Verfahrens werden daher ein Gehäuse-Unterteil, ein Gehäusedeckel und zumindest eine Dichtung bereitgestellt. Zumindest ein Gegenstand wird in das Gehäuse eingebracht und nach einem Aufsetzen des Gehäusedeckels auf das Gehäuse-Unterteil wird eine Abdichtung gegen das Eindringen von Schmutz, Feuchtigkeit und Flüssigkeit hergestellt.

Die Bezeichnung "Unterteil" beschränkt nicht die Anordnung des Gehäuses. Vielmehr kann z.B. bei einer Verwendung des Gehäuses im Unterflur-Bereich von Fahrzeugen (z.B. Straßenbahnen, Regionalzügen oder Bussen des öffentlichen Personenverkehrs) das Gehäuse-Unterteil oberhalb oder seitlich des Gehäusedeckels angeordnet sein. Das Gehäuse-Unterteil bildet aber in der Regel den größten Teil des Aufnahmeraums, in dem Gegenstände in das Gehäuse aufgenommen werden können.

Insbesondere bei der zuvor erwähnten Anordnung von Gehäusen im Unterflurbereich von Fahrzeugen, z.B. Schienenfahrzeugen, Fahrzeugen des öffentlichen Personenverkehrs und/oder Güterfahrzeugen, sind Gegenstände im Inneren des Gehäuses zuverlässig gegen Eindringen von Schmutz, Feuchtigkeit und Flüssigkeit zu schützen. Dabei ist es üblich, die Fahrzeuge unter Einsatz von Hochdruck-Flüssigkeitsreinigungsgeräten zu reinigen. Die Gehäuse, insbesondere der Übergang zwischen Gehäuse-Unterteil und Gehäusedeckel, müssen daher unter hohem Druck auftreffenden Flüssigkeiten widerstehen und ihr Eindringen in das Gehäuseinnere verhindern.

Häufig werden der Gehäusedeckel und/oder das Gehäuse-Unterteil als Biegeteile aus Blech gefertigt. Dies wird auch für das Gehäuse der vorliegenden Erfindung bevorzugt.

Grundsätzlich ist die Verwendung von Dichtungen bekannt, die einen zwischen dem Gehäuse-Unterteil und dem Gehäusedeckel verbleibenden Spalt ausfüllen. Dichtungen werden in der Regel aus elastischem Material gefertigt und zum sicheren Verschließen des Gehäuses wird eine dauerhaft wirksame Anpresskraft erzeugt, die den Gehäusedeckel an das Gehäuseunterteil anpresst und dabei die Dichtung elastisch verformt.

Um eine sichere und dauerhaft wirksame Abdichtung zu erzielen, ist die Dichtung mit einer definierten, vorgegebenen Anpresskraft zu beaufschlagen. Eine Möglichkeit besteht darin, zwischen Gehäuse-Unterteil und dem Gehäusedeckel ein oder mehrere Distanzstücke anzuordnen, die jeweils eine durch die Abmessungen des Distanzstücks definierte Distanz gewährleisten und außerdem zur Befestigung des Gehäusedeckels am Gehäuse-Unterteil verwendet werden. Wird der Gehäusedeckel durch jeweils eine Schraub-Befestigung an dem Distanzstück befestigt und wurde zuvor bereits das Distanzstück an dem Gehäuse-Unterteil befestigt, kann die definierte Anpresskraft durch entsprechende Herstellung der Schraub-Befestigung erzeugt werden. Z.B. wird eine Schraube oder Mutter mit einem Drehmomentschlüssel angezogen. Im Ergebnis wird eine kraftschlüssige Verbindung zwischen dem Gehäuse-Unterteil und dem Gehäusedeckel hergestellt, wobei die Dichtung in dem Spalt zwischen den Gehäuseteilen entsprechend der Anpresskraft verformt wird und den Spalt abdichtet.

Wenn das Distanzstück oder die Distanzstücke sicher und dauerhaft an dem Gehäuse-Unterteil befestigt werden soll/sollen, kann eine entsprechende Schweißverbindung hergestellt werden. Allerdings entstehen durch den beim Schweißen auftretenden Schweißverzug große Maß-Toleranzen, da der Schweißverzug nicht reproduzierbar auftritt. Zur Lösung dieser Problematik können Schweißschablonen verwendet werden und nach dem Schweißen Richtarbeiten ausgeführt werden, um vorgegebene Maßtoleranzen einzuhalten. Der Aufwand für die Herstellung der Befestigung des Distanzstücks an dem Gehäuse-Unterteil ist jedoch hoch.

Die DE 10 2006 007 312 A1 offenbart ein Gehäuseteil mit einer Dichtfläche, um das Gehäuseteil, das mittels einer Dichtung an einem anderen Gehäuseteil dichtend, mit mindestens einer Befestigungsöffnung zum Durchführen von Befestigungselementen, um das Gehäuseteil an einem anderen Gehäuseteil abzudichten, zu befestigen ist. An mindestens einer Befestigungsöffnung ist ein ringförmiger Überstand angeordnet, der über die Dichtfläche übersteht, wobei durch den Überstand ein Mindestabstand zwischen der Dichtfläche des Gehäuseteils und einer Dichtfläche an dem anderen Gehäuseteil definiert ist.

Die DE 199 36 748 A1 offenbart ein Befestigungssystem für Gehäusedeckel an Gehäusen für Kraftmaschinen, insbesondere von Gehäusen für Funktionsbauteile wie Getriebe, Zylinderkopf, Wellenlagerung oder dgl. von Kraftfahrzeugen. Es wird ein Befestigungssystem offenbart, das eine vollständige Entkopplung der auftretenden Schwingungen zwischen dem Gehäusedeckel und dem Gehäuse gewährleistet, nur geringe Kosten verursacht, eine einfache Montage ermöglicht und aus einer geringen Anzahl an Bauteilen besteht. Hierzu wird als Lösung vorgeschlagen, dass der Gehäusedeckel und das Dichtungs- und Schallentkopplungselement als einteiliges Bauteil ausgebildet sind, wobei im Bereich der Befestigungsstellen die Elastomerschmelze zur Bildung des Dichtungs- und Schallentkopplungselementes durchgespritzt und fest mit dem Randbereich der Bohrungen des Gehäusedeckelflansches verbunden ist.

WO 2013/080340 A1 beschreibt eine Fahrzeugkörperstruktur, die einen Boden an der Unterseite des Fahrzeugkörpers aufweist. Ein Holm aus Kunstharz erstreckt sich auf- und abwärts in dem Fahrzeugkörper in einer Fahrzeug-Breitenrichtung an einer Außenseite des Bodens. Ein Verbindungselement verbindet den Holm mit dem Boden.

EP 2 187 070 A1 beschreibt ein Abstandselement, das an beiden Enden für die Anbringung an einem Metallblechteil ausgestaltet ist. Das Abstandselement hat eine zentrale Bohrung mit einem Innengewinde zur Anbringung einer Komponente durch eine Schraube. Das Abstandselement ist an beiden Endflächen mit entsprechenden Unterschneidungen versehen, um Metallblechmaterial oder Wandmaterial formschlüssig aufzunehmen.

EP 0 841 240 A2 beschreibt ein Mehrkammer-Hohlprofil, in das eine Buchse derart eingesetzt ist, dass die Buchse nur eine außenliegende Kammer des Hohlprofils durchsetzt

Es ist eine Aufgabe der vorliegenden Erfindung, ein Gehäuse zum Aufnehmen von Gegenständen anzugeben, das ein Gehäuse-Unterteil, einen Gehäusedeckel, zumindest eine Dichtung zum Abdichten des Gehäuses und ein Distanzstück zum Gewährleisten einer definierten Distanz zwischen dem Gehäuse-Unterteil und dem Gehäusedeckel aufweist, wobei unter geringem Herstellungsaufwand und bei geringer Maß-Toleranz eine sichere Abdichtung des Gehäuse-Innenraums gegen Eindringen von Schmutz, Feuchtigkeit und Flüssigkeit erzielt werden soll.

Es ist eine weitere Aufgabe der vorliegenden Erfindung, ein entsprechendes Verfahren zum Aufnehmen von Gegenständen in einem Gehäuse anzugeben.

Gemäß einem Grundgedanken der vorliegenden Erfindung wird das Distanzstück an dem Gehäuse-Unterteil angeschraubt. Das Ergebnis einer solchen Befestigung des Distanzstücks an dem Gehäuse-Unterteil wird als "Schraub-Befestigung" bezeichnet. Auf mögliche Ausführungsformen von Schraub-Befestigungen wird noch näher eingegangen. Insbesondere kommen hierfür Gewindebohrungen, Gewindebolzen, Schrauben und/oder Muttern infrage.

Indem das Distanzstück an dem Gehäuse-Unterteil angeschraubt wird, kann auf ein Anschweißen verzichtet werden. Der Schweißverzug wird somit vermieden und die Maß-Toleranzen des Gehäuses bestimmen sich aus den entsprechenden Maß-Toleranzen der mechanischen Herstellung der Bauteile des Gehäuses. Gemäß einem weiteren Grundgedanken der Erfindung wird das Distanzstück derart in Kontakt mit einem Kontakt-Bereich des Gehäuse-Unterteils gebracht und/oder derart mit einem Verbindungs-Bereich des Gehäuse-Unterteils verbunden, dass eine unbeabsichtigte Drehung des Distanzstücks um eine Drehachse der Schraub-Befestigung verhindert wird. Das Drehen des Distanzstücks insbesondere während der Herstellung der Schraub-Befestigung an dem Gehäuse-Unterteil wird daher formschlüssig und/oder kraftschlüssig verhindert, d.h. ein Formschluss und/oder Kraftschluss zwischen dem Distanzstück einerseits und dem Gehäuse-Unterteil andererseits verhindert das Drehen des Distanzstücks relativ zum Gehäuse-Unterteil. Bevorzugt wird eine formschlüssige Verbindung, die das unbeabsichtigte Weiterdrehen des Distanzstücks während der Herstellung der kraftschlüssigen Schraub-Befestigung an dem Gehäuse-Unterteil verhindert. Der Formschluss wird allerdings erst durch den Kraftschluss gesichert. Vor der Sicherung sind das Distanzstück und das Gehäuse-Unterteil noch relativ zueinander beweglich. Insbesondere kann der Formschluss zwischen dem Distanzstück und dem Gehäuse-Unterteil noch eine Drehbewegung des Distanzstücks um die Drehachse der Schraub-Befestigung in einem begrenzten Drehwinkelbereich zulassen, jedoch keine vollständige Umdrehung des Distanzstücks um die Drehachse. Bei der Herstellung der Schraub-Befestigung schlägt das Distanzstück daher in der Art eines Formschlusses an einem entsprechenden Kontakt-Bereich des Gehäuse-Unterteils an und es wird ein weiteres Mitdrehen des Distanzstücks um die Drehachse verhindert.

Gemäß Anspruch 1 weist ein Gehäuse zum Aufnehmen von Gegenständen, das einen Aufnahmeraum zum Aufnehmen der Gegenstände aufweist, Folgendes auf:
- ein Gehäuse-Unterteil,
- einen Gehäusedeckel,
- zumindest eine Dichtung zum Abdichten des Gehäuses gegen ein Eindringen von Schmutz, Feuchtigkeit und Flüssigkeit,
- ein Distanzstück zum Gewährleisten einer durch die Abmessungen des Distanzstücks definierten Distanz zwischen dem Gehäuse-Unterteil und dem Gehäusedeckel,
wobei das Distanzstück
- außerhalb des Aufnahmeraums zwischen einem Befestigungsbereich des Gehäusedeckels und einem Befestigungsbereich des Gehäuse-Unterteils angeordnet ist und auf diese Weise die definierte Distanz zwischen dem Befestigungsbereich des Gehäusedeckels und dem Befestigungsbereich des Gehäuse-Unterteils gewährleistet,
- über eine erste Schraub-Befestigung an dem Befestigungsbereich des Gehäuse-Unterteils befestigt ist,
- über eine zweite Schraub-Befestigung an dem Befestigungsbereich des Gehäusedeckels befestigt ist und
derart in Kontakt mit einem Kontakt-Bereich des Gehäuse-Unterteils ist und/oder derart mit einem Verbindungs-Bereich des Gehäuse-Unterteils verbunden ist, dass eine Drehung des Distanzstücks um eine Drehachse der ersten Schraub-Befestigung und um eine Drehachse der zweiten Schraub-Befestigung verhindert ist.

Gemäß Anspruch 10 wird vorgeschlagen: Ein Verfahren zum Aufnehmen von Gegenständen in einem Gehäuse, das einen Aufnahmeraum zum Aufnehmen der Gegenstände aufweist, wobei als Teile des Gehäuses bereitgestellt werden:
- ein Gehäuse-Unterteil,
- ein Gehäusedeckel,
- zumindest eine Dichtung zum Abdichten des Gehäuses gegen ein Eindringen von Schmutz, Feuchtigkeit und Flüssigkeit,
- ein Distanzstück zum Gewährleisten einer durch die Abmessungen des Distanzstücks definierten Distanz zwischen dem Gehäuse-Unterteil und dem Gehäusedeckel,
wobei das Distanzstück
- außerhalb des Aufnahmeraums zwischen einem Befestigungsbereich des Gehäusedeckels und einem Befestigungsbereich des Gehäuse-Unterteils angeordnet wird und auf diese Weise die definierte Distanz zwischen dem Befestigungsbereich des Gehäusedeckels und dem Befestigungsbereich des Gehäuse-Unterteils gewährleistet wird,
- über eine erste Schraub-Befestigung an dem Befestigungsbereich des Gehäuse-Unterteils befestigt wird,
- derart in Kontakt mit einem Kontakt-Bereich des Gehäuse-Unterteils ist oder gebracht wird und/oder derart mit einem Verbindungs-Bereich des Gehäuse-Unterteils verbunden wird, dass eine Drehung des Distanzstücks um eine Drehachse der ersten Schraub-Befestigung und um eine Drehachse der zweiten Schraub-Befestigung verhindert ist, und
- nach einem Einbringen zumindest eines Gegenstandes in das Gehäuse und nach einem Aufsetzen des Gehäusedeckels auf das Gehäuse-Unterteil, über eine zweite Schraub-Befestigung an dem Befestigungsbereich des Gehäusedeckels befestigt wird.

Dementsprechend ist/wird eine Schraub-Befestigung des Distanzstücks nicht lediglich am Gehäuse-Unterteil, sondern auch am Gehäusedeckel hergestellt. Das Distanzstück dient daher nicht lediglich der Gewährleistung einer definierten Distanz zwischen Gehäuse-Unterteil und Gehäusedeckel, sondern auch der Befestigung des Gehäusedeckels über das Distanzstück am Gehäuse-Unterteil.

Durch den Kontakt des Distanzstücks mit dem Kontakt-Bereich des Gehäuse-Unterteils und/oder durch die Verbindung des Distanzstücks mit dem Verbindungs-Bereich des Gehäuse-Unterteils wird insbesondere eine vollständige Umdrehung des Distanzstücks um die Drehachse der ersten Schraub-Befestigung und um eine Drehachse der zweiten Schraub-Befestigung verhindert.

Der Kontakt-Bereich bzw. der Verbindungs-Bereich ist/sind ein Bereich bzw. Bereiche des Gehäuse-Unterteils, der/die von dem Befestigungsbereich des Gehäuse-Unterteils, an dem das Distanzstück über eine erste Schraub-Befestigung befestigt ist, verschieden ist/sind, d.h. beabstandet ist/sind. Insbesondere befindet sich der Kontakt-Bereich bzw. Verbindungs-Bereich seitlich der Drehachse der ersten Schraub-Befestigung, während sich der Befestigungsbereich des Gehäuse-Unterteils aus Sicht des Distanzstücks in Richtung der Drehachse befindet.

Wie bereits erwähnt, ist das Distanzstück vorzugsweise formschlüssig in Kontakt mit dem Kontakt-Bereich des Gehäuse-Unterteils und ist/wird dadurch eine Drehung des Distanzstücks um die Drehachse der ersten Schraub-Befestigung und um die Drehachse der zweiten Schraub-Befestigung verhindert.

Der formschlüssige Kontakt wird vorzugsweise durch eine entsprechende Gestaltung des Distanzstücks möglich. Insbesondere weist das Distanzstück, betrachtet in einem Querschnitt quer zur Drehachse der zweiten Schraub-Befestigung, einen polygonalen Außenumriss auf und ist ein geradliniger Abschnitt des Außenumrisses formschlüssig in Kontakt mit dem Kontakt-Bereich des Gehäuse-Unterteils. Insbesondere kann das Distanzstück über einen Längsabschnitt entlang der mit der Drehachse der ersten Schraub-Befestigung zusammenfallenden Längsachse des Distanzstücks einen gleich bleibenden, konstanten Außenumriss aufweisen, z.B. einen quadratischen Außenumriss oder einen anderen polygonalen Außenumriss. In diesem Fall liegt eine der polygonalen Querschnittsform entsprechende ebene Außenoberfläche des Distanzstücks an dem vorzugsweise ebenfalls ebenen Kontakt-Bereich des Gehäuse-Unterteils an. Dabei ist das Distanzstück während der Herstellung der Schraub-Befestigung an dem Gehäuse-Unterteil gleichzeitig in einer Position, die die Herstellung der Schraub-Befestigung ermöglicht. Z.B. fluchtet dabei eine Gewindebohrung des Distanzstücks mit einer Durchgangsbohrung in dem Gehäuse-Unterteil, durch die hindurch ein Schraubenschaft in die Gewindebohrung des Distanzstücks eingeschraubt werden kann.

Insbesondere kann der Bereich des Distanzstücks, der die Kontaktfläche zum Kontaktieren des Kontakt-Bereichs des Gehäuse-Unterteils bildet, ein (betrachtet in einer Richtung quer zur Drehachse) vorspringender Bereich sein. Es ist aber auch möglich, dass das Distanzstück einen über seine gesamte axiale Länge gleich bleibenden Außenumriss aufweist. Ein vorspringender Bereich hat den Vorteil, dass in axialer Richtung des vorspringenden Bereichs ein Freiraum verbleibt, in dem weitere Bauteile des Gehäuses angeordnet sein können, z.B. eine Dichtung und/oder der Verlauf des Übergangs zwischen dem Befestigungsbereich des Gehäuse-Unterteils und dem Kontakt-Bereich des Gehäuse-Unterteils.

Vorzugsweise besteht (bzw. wird bei der Ausführung des Verfahrens zum Aufnehmen von Gegenständen in das Gehäuse hergestellt) der Kontakt und/oder die Verbindung des Distanzstücks zu dem Gehäuse-Unterteil, der/die die Drehung des Distanzstücks verhindert, zu einem Kontakt-Bereich und/oder Verbindungsbereich des Gehäuse-Unterteils, der sich ausgehend von dem Befestigungsbereich des Gehäuse-Unterteils in eine Richtung erstreckt, die entlang der Drehachse der ersten Schraub-Befestigung und entlang der Drehachse der zweiten Schraub-Befestigung verläuft. Dies ist insbesondere bei der oben bereits erwähnten seitlichen Anordnung des Kontakt-Bereichs und/oder des Verbindungs-Bereichs der Fall. Auf diese Weise kann sich das Distanzstück seitlich abstützen, um eine Verdrehung zu verhindern, während die Schraub-Befestigung zu dem Gehäuse-Unterteil und/oder zu dem Gehäusedeckel hergestellt wird.

Ferner kann eine erste Dichtung gegen ein Eindringen von Schmutz, Feuchtigkeit und Flüssigkeit zwischen dem Kontakt-Bereich und/oder Verbindungs-Bereich des Gehäuse-Unterteils und dem Gehäusedeckel angeordnet sein/werden. Dies hat den Vorteil, dass der Kontakt-Bereich bzw. Verbindungs-Bereich außer dem Schutz gegen ein Verdrehen des Distanzstücks auch eine weitere Funktion ausübt, nämlich den Spalt zum Gehäusedeckel zur Aufnahme der Dichtung zu bilden. Der Kontakt-Bereich und/oder Verbindungs-Bereich des Gehäuse-Unterteils bildet daher vorzugsweise einen umlaufenden Rand als Anlagefläche für eine ebenfalls umlaufende Dichtung zum Gehäusedeckel.

Allgemeiner formuliert wird es bevorzugt, dass der Kontakt-Bereich und/oder Verbindungsbereich des Gehäuse-Unterteils bei geschlossenem Gehäusedeckel in einem Abstand zu dem Gehäusedeckel angeordnet ist, sodass ein Spalt zwischen dem Gehäuse-Unterteil und dem Gehäusedeckel verbleibt, in dem sich eine erste Dichtung gegen ein Eindringen von Schmutz, Feuchtigkeit und Flüssigkeit befindet.

Vorzugsweise bilden der Befestigungsbereich des Gehäuse-Unterteils und der Befestigungsbereich des Gehäusedeckels parallel zueinander verlaufende ebene Oberflächen als Anlageflächen für ebenfalls parallel zueinander verlaufende ebene Oberflächen des Distanzstücks. Dadurch wird eine sichere, querkräftefreie Anpressung des Gehäusedeckels an das Gehäuse-Unterteil ermöglicht. Die von dem Befestigungsbereich des Gehäuse-Unterteils gebildete ebene Oberfläche verläuft z.B. im Längsschnitt des Gehäuses betrachtet senkrecht zu der seitlichen Außenoberfläche des Gehäuses, die ebenfalls durch das Gehäuse-Unterteil gebildet wird. Eine solche Gestaltung kann auf einfache Weise durch ein Blech-Biegeteil als Gehäuse-Unterteil erreicht werden.

Insbesondere abhängig von der Ausgestaltung der Schraub-Befestigung an dem Befestigungsbereich des Gehäuse-Unterteils kann dort Schmutz, Feuchtigkeit und Flüssigkeit eintreten, insbesondere durch einen Spalt zwischen dem Distanzstück und dem Befestigungsbereich sowie durch eine Durchgangsöffnung im Befestigungsbereich hindurch in den Gehäuseinnenraum. Um dies zu verhindern, wird es bevorzugt, dass sich zwischen dem Distanzstück und dem Befestigungsbereich des Gehäuse-Unterteils eine Dichtung (im Folgenden zur Unterscheidung von der oben erwähnten Dichtung "zweite Dichtung") befindet, sodass ein Eindringen von Schmutz, Feuchtigkeit und Flüssigkeit an dem Befestigungsbereich des Gehäuse-Unterteils verhindert wird/ist. Z.B. weist das Distanzstück an seiner zum Befestigungsbereich des Gehäuse-Unterteils weisenden Oberfläche eine Nut auf, z.B. eine Ringnut, in der die zweite Dichtung, z.B. eine ringförmige Dichtung, angeordnet wird/ist. Durch Herstellen der Schraub-Befestigung an dem Befestigungsbereich des Gehäuse-Unterteils wird die Dichtung von dem Distanzstück gegen den Befestigungsbereich gepresst, sodass die Dichtwirkung erzielt wird.

Vorzugsweise fluchten die Drehachse der ersten Schraub-Befestigung und die Drehachse der zweiten Schraub-Befestigung miteinander. Dadurch kann das Distanzstück als kompaktes, platzsparendes Bauteil hergestellt werden, das insbesondere eine zentrale Längsachse aufweist, die mit den Drehachsen zusammenfällt.

In einer bevorzugten Ausgestaltung weist das Distanzstück entweder eine durchgehende Gewindebohrung oder zwei separate Gewindebohrungen auf, die der Herstellung der ersten Schraub-Befestigung und der Herstellung der zweiten Schraub-Befestigung dient/dienen. Insbesondere die durchgehende Gewindebohrung kann auf einfache Weise hergestellt werden.

Unter einer durchgehenden Gewindebohrung wird eine durch das Distanzstück durchgehende Bohrung verstanden. Das Gewinde kann zwar, muss aber nicht durchgehend sein.

Wiederum insbesondere im Fall einer durchgehenden Gewindebohrung, jedoch auch in anderen Fällen, wird es bevorzugt, dass die durch Verschrauben miteinander verbundenen Befestigungsmittel der ersten Schraub-Befestigung (der Befestigung des Distanzstücks an dem Gehäuse-Unterteil) außerdem in einem Gewindebereich der ersten Schraub-Befestigung miteinander verklebt sind, sodass ein Eindringen von Schmutz, Feuchtigkeit und Flüssigkeit durch den Gewindebereich der ersten Schraub-Befestigung in das Gehäuse verhindert ist. Der Klebstoff sichert außerdem noch gegen ein unbeabsichtigtes Lösen der Schraub-Befestigung.

Das Gehäuse weist vorzugsweise eine Mehrzahl der Distanzstücke auf, die um die durch den Gehäusedeckel zu verschließende Öffnung im Gehäuse-Unterteil herum verteilt angeordnet sind. Dabei ist vorzugsweise in Bezug auf jedes der Distanzstücke eine beliebige Kombination der Merkmale realisiert, die oben bereits beschrieben wurden oder noch im Weiteren anhand der beigefügten Figur beschrieben werden.

Ein Ausführungsbeispiel der Erfindung wird nun unter Bezugnahme auf die beigefügte Zeichnung beschrieben. Die einzige Figur der Zeichnung zeigt:

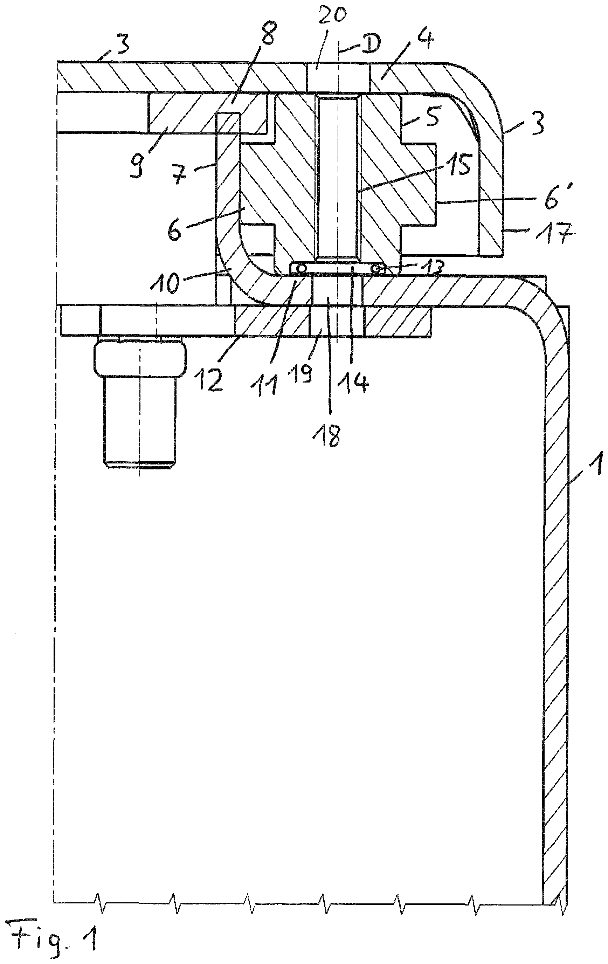

- Fig. 1: einen Längsschnitt durch einen Bereich eines Gehäuses, an dem ein Gehäusedeckel über ein Distanzstück mit einem Gehäuse-Unterteil verbunden ist.

Der in Fig. 1 dargestellte Längsschnitt durch einen Bereich eines Gehäuses weist einen Bereich eines Gehäuse-Unterteils 1, einen Bereich eines Gehäusedeckels 3 und ein Distanzstück 5 auf. Das Gehäuse-Unterteil 1 und der Gehäusedeckel 3 sind insbesondere jeweils aus einem Blech gebogen worden. Der unten in Fig. 1 dargestellte Abschnitt des Gehäuse-Unterteils 1 bildet dabei die Gehäuseaußenwand (rechts davon befindet sich der Außenraum und links davon der Innenraum des Gehäuses).

Im Verlauf des Gehäuse-Unterteils 1 von unten nach oben ist das Unterteil abgebogen und bildet somit einen horizontal verlaufenden Schenkel, nämlich einen Befestigungsbereich 11 des Gehäuse-Unterteils, an dem das Distanzstück 5 mit dem Gehäuse-Unterteils 1 verbunden ist. Im weiteren Verlauf des gebogenen Blechteils bildet dieses in dem gezeigten Längsschnitt einen gekrümmten Übergangsbereich 10 und einen geraden, sich nach oben erstreckenden Endbereich, der ein Kontakt-Bereich 7 für einen Kontakt zu einem vorspringenden Bereich 6 des Distanzstücks 5 ist. Das Distanzstück 5 hat auf der axialen Höhe des vorspringenden Bereichs 6 einen polygonalen Querschnitt (nicht dargestellt), z.B. einen viereckigen zum Beispiel quadratischen Querschnitt. Dabei ist auch in der Darstellung der Fig. 1 rechts von der zentralen Längsachse des Distanzstücks 5, die auch die Drehachse D für die Schraub-Befestigungen ist, ebenfalls ein vorspringender Bereich 6' gebildet. Das Distanzstück 5 könnte daher auch um die Drehachse D gedreht zwischen dem Gehäusedeckel 3 und dem Gehäuse-Unterteil 1 angeordnet werden, sodass der vorspringende Bereich 6' anstelle des vorspringenden Bereichs 6 in Kontakt mit dem Kontakt-Bereich 7 des Gehäuse-Unterteils 1 ist. Dabei ist die ebene Oberfläche des vorspringenden Bereichs 6 oder 6' vorzugsweise vollflächig in Kontakt mit der ebenfalls ebenen Oberfläche des Kontaktbereichs 7.

Im Verlauf des Gehäusedeckels 3 von oben links nach oben rechts in Fig. 1 befindet sich ein Befestigungsbereich 4 zur Befestigung des Gehäusedeckels 3 an dem Distanzstück 5. Im weiteren Verlauf des Gehäusedeckels 3 ist dieser abgebogen und bildet einen nach unten, Richtung Gehäuse-Unterteil 1 weisenden Schenkel 17, der in einem Abstand zu dem Gehäuse-Unterteil 1 endet.

In dem speziellen Ausführungsbeispiel, das Fig. 1 zeigt, ist unterhalb des Befestigungsbereichs 11 des Gehäuse-Unterteils 1 ein Anbauteil 12 dargestellt, welches sich im Gehäuseinneren befindet. Dieses Anbauteil 12 kann jedoch ersatzlos entfallen. Ein Vorteil der Erfindung besteht aber generell darin, dass ein solches Anbauteil vorhanden sein kann und bei der Herstellung der Schraub-Befestigung des Distanzstücks an dem Befestigungsbereich des Gehäuse-Unterteils (nicht nur in der Ausführung, die in Fig. 1 dargestellt ist) gleichzeitig befestigt werden kann. In dem speziellen, in Fig. 1 dargestellten Ausführungsbeispiel wird dazu eine nicht dargestellte Schraube mit ihrem Schraubenschaft von unten durch eine Durchgangsöffnung 19 des Anbauteils 12, durch eine Durchgangsöffnung 18 des Befestigungsbereichs 11 und in dem speziellen Ausführungsbeispiel auch durch einen sonst optional vorhandenen Aussparungsbereich 14 des Distanzstücks 5 hindurch in eine Gewindebohrung 15 des Distanzstücks 5 eingeschraubt, bis das Anbauteil 12 und das Distanzstück 5 an dem Befestigungsbereich 11 angeschraubt sind.

Der Aussparungsbereich 14 in dem Distanzstück 5, der an der dem Befestigungsbereich 11 zugewandten Oberfläche des Distanzstücks 5 ausgebildet ist, weist in dem speziellen Ausführungsbeispiel eine Ringdichtung 13 auf, sodass kein Schmutz, keine Feuchtigkeit und auch keine Flüssigkeit von außen, insbesondere durch den Spalt zwischen dem Schenkel 17 und dem Gehäuse-Unterteil 1, in die Durchgangsöffnung 18 und damit auch in den Gehäuseinnenraum gelangen kann.

Das Verfahren zum Aufnehmen von zumindest einem Gegenstand in das in Fig. 1 teilweise dargestellte Gehäuse wird z.B. wie folgt ausgeführt:
Das Distanzstück 5 wird insbesondere wie bereits beschrieben und optional gleichzeitig mit dem Anbauteil 12 an dem Befestigungsbereich 11 des Gehäuse-Unterteils 1 durch Herstellen der Schraub-Befestigung befestigt. Aufgrund des Kontakts zwischen dem vorspringenden Bereich 6 und dem Kontakt-Bereich 7 des Gehäuse-Unterteils 1 wird dadurch ein Mitdrehen des Distanzstücks 5 während des Einschraubens der Schraube verhindert. Alternativ zu einem bloßen Kontakt des vorspringenden Bereichs 6 zu dem Kontakt-Bereich 7 könnte das Distanzstück vorab oder während der Herstellung der Schraub-Befestigung an dem Befestigungsbereich des Gehäuse-Unterteils mit dem Gehäuse-Unterteil verbunden werden, z.B. über eine zusätzliche Schraubverbindung, etwa über eine Schraube, deren Schaft in horizontaler Richtung verläuft.

Ferner wird während der Herstellung der Schraub-Verbindung des Distanzstücks 5 zu dem Befestigungsbereich 11 vorzugsweise ein Klebstoff in die Gewindebohrung 15 eingebracht, z.B. durch Bestreichen des Schraubenschaftes der nicht dargestellten Schraube oder durch Einbringen des Klebstoffs z.B. von oben in die Gewindebohrung 15. Nach dem Aushärten und/oder Abbinden des Klebstoffs ist die Schraub-Befestigung gegen unbeabsichtigtes Lösen gesichert und außerdem eine Abdichtung gegen Eindringen von Schmutz, Feuchtigkeit und Flüssigkeit durch die Gewindebohrung 15 hindurch in den Gehäuseinnenraum erzielt.

Vor, während und/oder nach dem Herstellen der Schraub-Verbindung des Distanzstücks 5 zu dem Befestigungsbereich 11 kann zumindest ein in Fig. 1 nicht dargestellter Gegenstand in das Gehäuse eingebracht werden.

Nach dem Schließen des Gehäusedeckels 3 wird dann die zweite Schraub-Befestigung hergestellt, nämlich die Schraub-Befestigung zwischen dem Gehäusedeckel 3 und dem Distanzstück 5. Hierzu wird eine nicht dargestellte Schraube von oben durch eine Durchgangsbohrung 20 des Gehäusedeckels 3 mit ihrem Schraubenschaft in die Gewindebohrung 15 eingeschraubt und festgezogen.

Allgemein, nicht nur in Bezug auf die Ausführung von Fig. 1, gilt, dass die Schraub-Befestigungen mit Hilfe von weiteren Bauteilen hergestellt werden können. Z.B. kann bei wenigstens einer der Schraub-Befestigungen eine Beilagscheibe verwendet werden. Alternativ oder zusätzlich kann statt einer Schraube mit einem Schraubenkopf ein Gewindebolzen in die Gewindebohrung des Distanzstücks eingeschraubt werden. Wird die Verschraubung des eingeschraubten Gewindebolzens mit der Gewindebohrung z.B. wie oben beschrieben durch Klebstoff gegen unbeabsichtigtes Lösen gesichert, kann anschließend die Schraub-Befestigung durch Aufschrauben einer Mutter fertiggestellt werden.

Eine weitere Variante einer Schraub-Befestigung eines erfindungsgemäßen Distanzstückes sieht vor, dass bereits vor dem Anordnen des Distanzstückes an dem Gehäuse-Unterteil ein Gewindebolzen oder mehr als ein Gewindebolzen an dem Distanzstück angeordnet wird und dadurch fest mit dem Distanzstück verbunden ist. Dies geschieht beispielsweise durch das bereits erwähnte Einschrauben des Gewindebolzens in eine Gewindebohrung des Distanzstücks. Der Gewindebolzen kann jedoch auch auf andere Weise mit dem Distanzstück verbunden werden. Es ist auch möglich, dass ein Gewindebolzen durch Drehen aus einem Werkstück ausgeformt wird, wobei das Werkstück auch zu dem gewünschten Distanzstück ausgeformt wird. Das Distanzstück und der Gewindebolzen sind in diesem Fall ausgeformte Bereiche desselben, einstückigen Werkstücks.

Das in Fig. 1 dargestellte Distanzstück oder ein anderes Distanzstück mit einer Durchgangs-Gewindebohrung stellt jedoch die bevorzugte Ausführungsform dar, da es auf besonders einfache Weise hergestellt werden kann. Es muss lediglich eine (insbesondere zentrische) Durchgangsbohrung gebohrt werden und anschließend ein Gewinde eingeschnitten werden.

Die in Fig. 1 dargestellten Bereiche des Distanzstücks 5, die sich oberhalb und unterhalb der vorspringenden Bereich 6, 6' befinden, sind vorzugsweise zylindrisch geformt. Dadurch entsteht der in Fig. 1 für den gebogenen Übergangsbereich 10 des Gehäuse-Unterteils und der für die Dichtung 9 genutzte Freiraum.

Statt der bereits erwähnten polygonalen Form kann ein erfindungsgemäßes Distanzstück lediglich einen quer zur Drehachse der Schraub-Befestigung vorspringenden Bereich oder lediglich einen ebenen Oberflächenbereich oder mehrere ebene Oberflächenbereiche über einen ansonsten z.B. kreisrunden Umfangsverlauf aufweisen, um durch Kontakt mit dem Kontakt-Bereich des Gehäuse-Unterteils ein Verdrehen während der Herstellung der Schraub-Befestigung zu verhindern.

## Patentansprüche

1. Gehäuse mit einem Aufnahmeraum zum Aufnehmen von Gegenständen, wobei das Gehäuse aufweist:
- ein Gehäuse-Unterteil (1),
- einen Gehäusedeckel (3),
- zumindest eine Dichtung (9, 13) zum Abdichten des Gehäuses gegen ein Eindringen von Schmutz, Feuchtigkeit und Flüssigkeit,
- ein Distanzstück (5) zum Gewährleisten einer durch die Abmessungen des Distanzstücks (5) definierten Distanz zwischen dem Gehäuse-Unterteil (1) und dem Gehäusedeckel (3),
wobei das Distanzstück (5)
- außerhalb des Aufnahmeraums zwischen einem Befestigungsbereich (4) des Gehäusedeckels (3) und einem Befestigungsbereich (11) des Gehäuse-Unterteils (1) angeordnet ist und auf diese Weise die definierte Distanz zwischen dem Befestigungsbereich (4) des Gehäusedeckels (3) und dem Befestigungsbereich (11) des Gehäuse-Unterteils (1) gewährleistet,
- über eine erste Schraub-Befestigung an dem Befestigungsbereich (11) des Gehäuse-Unterteils (1) befestigt ist,
- über eine zweite Schraub-Befestigung an dem Befestigungsbereich (4) des Gehäusedeckels (3) befestigt ist und
- derart in Kontakt mit einem Kontakt-Bereich (7) des Gehäuse-Unterteils (1) ist und/oder derart mit einem Verbindungs-Bereich des Gehäuse-Unterteils verbunden ist, dass eine Drehung des Distanzstücks (5) um eine Drehachse (D) der ersten Schraub-Befestigung und um eine Drehachse (D) der zweiten Schraub-Befestigung verhindert ist.

2. Gehäuse nach Anspruch 1, wobei das Distanzstück (5) formschlüssig in Kontakt mit dem Kontakt-Bereich (7) des Gehäuse-Unterteils (1) ist und dadurch eine Drehung des Distanzstücks (5) um die Drehachse (D) der ersten Schraub-Befestigung und um die Drehachse (D) der zweiten Schraub-Befestigung verhindert ist.

3. Gehäuse nach Anspruch 2, wobei das Distanzstück (5), betrachtet in einem Querschnitt quer zur Drehachse (D) der zweiten Schraub-Befestigung, einen polygonalen Außenumriss aufweist und ein geradliniger Abschnitt des polygonalen Außenumrisses formschlüssig in Kontakt mit dem Kontakt-Bereich (7) des Gehäuse-Unterteils (1) ist.

4. Gehäuse nach einem der Ansprüche 1-3, wobei der Kontakt und/oder die Verbindung des Distanzstücks (5) zu dem Gehäuse-Unterteil (1), der/die die Drehung des Distanzstücks (5) verhindert, zu einem Kontakt-Bereich (7) und/oder Verbindungs-Bereich des Gehäuse-Unterteils (1) besteht, der sich ausgehend von dem Befestigungsbereich (11) des Gehäuse-Unterteils (1) in eine Richtung erstreckt, die entlang der Drehachse (D) der ersten Schraub-Befestigung und entlang der Drehachse (D) der zweiten Schraub-Befestigung verläuft.

5. Gehäuse nach Anspruch 4, wobei der Kontakt-Bereich (7) und/oder Verbindungs-Bereich des Gehäuse-Unterteils (1) bei geschlossenem Gehäusedeckel (3) in einem Abstand zu dem Gehäusedeckel (3) angeordnet ist, so dass ein Spalt (8) zwischen dem Gehäuse-Unterteil (1) und dem Gehäusedeckel (3) verbleibt, in dem sich eine erste Dichtung (9) gegen ein Eindringen von Schmutz, Feuchtigkeit und Flüssigkeit befindet.

6. Gehäuse nach einem der vorhergehenden Ansprüche, wobei sich zwischen dem Distanzstück (5) und dem Befestigungsbereich (11) des Gehäuse-Unterteils (1) eine zweite Dichtung (13) befindet, sodass ein Eindringen von Schmutz, Feuchtigkeit und Flüssigkeit an dem Befestigungsbereich (11) des Gehäuse-Unterteils (1) verhindert wird.

7. Gehäuse nach einem der vorhergehenden Ansprüche, wobei die Drehachse (D) der ersten Schraub-Befestigung und die Drehachse (D) der zweiten Schraub-Befestigung miteinander fluchten.

8. Gehäuse nach Anspruch 7, wobei das Distanzstück (5) eine durch das Distanzstück (5) durchgehende Gewindebohrung (15) oder zwei separate Gewindebohrungen aufweist, zur Herstellung der ersten Schraub-Befestigung und zur Herstellung der zweiten Schraub-Befestigung.

9. Gehäuse nach einem der vorhergehenden Ansprüche, wobei durch Verschrauben miteinander verbundene Befestigungsmittel der ersten Schraub-Befestigung außerdem in einem Gewindebereich der ersten Schraub-Befestigung miteinander verklebt sind, sodass ein Eindringen von Schmutz, Feuchtigkeit und Flüssigkeit durch den Gewindebereich der ersten Schraub-Befestigung in das Gehäuse verhindert ist.

10. Verfahren zum Aufnehmen von Gegenständen in einem Gehäuse, das einen Aufnahmeraum zum Aufnehmen der Gegenstände aufweist, wobei als Teile des Gehäuses bereitgestellt werden:
- ein Gehäuse-Unterteil (1),
- ein Gehäusedeckel (3),
- zumindest eine Dichtung (9, 13) zum Abdichten des Gehäuses gegen ein Eindringen von Schmutz, Feuchtigkeit und Flüssigkeit,
- ein Distanzstück (5) zum Gewährleisten einer durch die Abmessungen des Distanzstücks (5) definierten Distanz zwischen dem Gehäuse-Unterteil und dem Gehäusedeckel (3),
wobei das Distanzstück (5)
- außerhalb des Aufnahmeraums zwischen einem Befestigungsbereich (4) des Gehäusedeckels (3) und einem Befestigungsbereich (11) des Gehäuse-Unterteils (1) angeordnet wird und auf diese Weise die definierte Distanz zwischen dem Befestigungsbereich (4) des Gehäusedeckels (3) und dem Befestigungsbereich (11) des Gehäuse-Unterteils (1) gewährleistet wird,
- über eine erste Schraub-Befestigung an dem Befestigungsbereich (11) des Gehäuse-Unterteils (1) befestigt wird,
- derart in Kontakt mit einem Kontakt-Bereich (7) des Gehäuse-Unterteils (1) ist oder gebracht wird und/oder derart mit einem Verbindungs-Bereich des Gehäuse-Unterteils (1) verbunden wird, dass eine Drehung des Distanzstücks (5) um eine Drehachse (D) der ersten Schraub-Befestigung und um eine Drehachse (D) der zweiten Schraub-Befestigung verhindert ist, und
- nach einem Einbringen zumindest eines Gegenstandes in das Gehäuse und nach einem Aufsetzen des Gehäusedeckels (3) auf das Gehäuse-Unterteil, über eine zweite Schraub-Befestigung an dem Befestigungsbereich (4) des Gehäusedeckels (3) befestigt wird.

## Claims

1. A housing with an accommodating space for accommodating articles, wherein the housing comprises:
- a lower housing part (1),
- a housing cover (3),
- at least one seal (9, 13) for sealing the housing against a penetration of dirt, moisture and liquid,
- a spacer (5) for ensuring a spacing, defined by the dimensions of the spacer (5), between the lower housing part (1) and the housing cover (3),
wherein the spacer (5)
- is arranged outside the accommodating space, between a fastening region (4) of the housing cover (3) and a fastening region (11) of the lower housing part (1), and thus ensures the defined spacing between the fastening region (4) of the housing cover (3) and the fastening region (11) of the lower housing part (1),
- is fastened on the fastening region (11) of the lower housing part (1) via a first screw fastening,
- is fastened on the fastening region (4) of the housing cover (3) via a second screw fastening, and
- is in contact with a contact region (7) of the lower housing part (1), and/or is connected to a connecting region of the lower housing part, such that the spacer (5) is prevented from rotating about an axis of rotation (D) of the first screw fastening and about an axis of rotation (D) of the second screw fastening.

2. The housing according to claim 1, wherein the spacer (5) is in form-fitting contact with the contact region (7) of the lower housing part (1), and the spacer (5) is thus prevented from rotating about the axis of rotation (D) of the first screw fastening and about the axis of rotation (D) of the second screw fastening.

3. The housing according to claim 2, wherein the spacer (5), as seen in a cross section in a direction transverse to the axis of rotation (D) of the second screw fastening, has a polygonal outline, and a rectilinear portion of the polygonal outline is in form-fitting contact with the contact region (7) of the lower housing part (1) .

4. The housing according to one of claims 1-3, wherein the contact and/or the connection of the spacer (5) to the lower housing part (1), which contact and/or connection prevents the spacer (5) from rotating and is a contact and/or connection to a contact region (7) and/or a connecting region of the lower housing part (1), said region extending from the fastening region (11) of the lower housing part (1) in a direction which runs along the axis of rotation (D) of the first screw fastening and along the axis of rotation (D) of the second screw fastening.

5. The housing according to claim 4, wherein the contact region (7) and/or connecting region of the lower housing part (1), when the housing cover (3) is closed, is arranged at a distance to the housing cover (3), so that a gap (8) remains between the lower housing part (1) and the housing cover (3), a first seal (9) against the penetration of dirt, moisture and liquid being located in said gap.

6. The housing according to one of the preceding claims, wherein a second seal (13) is located between the spacer (5) and the fastening region (11) of the lower housing part (1), so that a penetration of dirt, moisture and liquid at the fastening region (11) of the lower housing part (1) is prevented.

7. The housing according to one of the preceding claims, wherein the axis of rotation (D) of the first screw fastening and the axis of rotation (D) of the second screw fastening are aligned with one another.

8. The housing according to claim 7, wherein the spacer (5) has a threaded bore (15) passing through it, or two separate threaded bores, in order to establish the first screw fastening and to establish the second screw fastening.

9. The housing according to one of the preceding claims, wherein it is also the case that screw-connected fastening means of the first screw fastening are adhesively bonded to one another in a threaded region of the first screw fastening, so that dirt, moisture and liquid are prevented from penetrating into the housing through the threaded region of the first screw fastening.

10. A method for accommodating articles in a housing which has an accommodating space for accommodating the articles, wherein the housing parts provided are as follows:
- a lower housing part (1),
- a housing cover (3),
- at least one seal (9, 13) for sealing the housing against a penetration of dirt, moisture and liquid,
- a spacer (5) for ensuring a spacing, defined by the dimensions of the spacer (5), between the lower housing part and the housing cover (3),
wherein the spacer (5)
- is arranged outside the accommodating space, between a fastening region (4) of the housing cover (3) and a fastening region (11) of the lower housing part (1), and the defined spacing between the fastening region (4) of the housing cover (3) and the fastening region (11) of the lower housing part (1) is ensured in this way,
- is fastened on the fastening region (11) of the lower housing part (1) via a first screw fastening,
- is in contact, or is brought into contact, with a contact region (7) of the lower housing part (1), and/or is connected to a connecting region of the lower housing part (1) in such a way that the spacer (5) is prevented from rotating about an axis of rotation (D) of the first screw fastening and about an axis of rotation (D) of the second screw fastening, and
- is fastened on the fastening region (4) of the housing cover (3) via a second screw fastening once at least one article has been introduced into the housing and the housing cover (3) has been placed on the lower housing part.

## Revendications

1. Boîtier comprenant un espace de réception pour recevoir des objets, le boîtier présentant :
- une partie inférieure de boîtier (1),
- un couvercle de boîtier (3),
- au moins un joint d'étanchéité (9, 13) pour étanchéifier le boîtier vis-à-vis d'une pénétration de saleté, d'humidité et de liquide,
- une pièce d'espacement (5) pour garantir une distance définie par les dimensions de la pièce d'espacement (5) entre la partie inférieure de boîtier (1) et le couvercle de boîtier (3),
la pièce d'espacement (5)
- étant disposée à l'extérieur de l'espace de réception entre une région de fixation (4) du couvercle de boîtier (3) et une région de fixation (11) de la partie inférieure de boîtier (1), et garantissant de cette manière la distance définie entre la région de fixation (4) du couvercle de boîtier (3) et la région de fixation (11) de la partie inférieure de boîtier (1),
- étant fixée par le biais d'une première fixation par vis à la région de fixation (11) de la partie inférieure de boîtier (1),
- étant fixée par le biais d'une deuxième fixation par vis à la région de fixation (4) du couvercle de boîtier (3) et
- étant en contact avec une région de contact (7) de la partie inférieure de boîtier (1) et/ou étant connectée à une région de liaison de la partie inférieure de boîtier, de telle sorte qu'une rotation de la pièce d'espacement (5) autour d'un axe de rotation (D) de la première fixation par vis et autour d'un axe de rotation (D) de la deuxième fixation par vis soit empêchée.

2. Boîtier selon la revendication 1, dans lequel la pièce d'espacement (5) est en contact par engagement par correspondance de formes avec la région de contact (7) de la partie inférieure de boîtier (1) et, de ce fait, une rotation de la pièce d'espacement (5) autour de l'axe de rotation (D) de la première fixation par vis et autour de l'axe de rotation (D) de la deuxième fixation par vis est empêchée.

3. Boîtier selon la revendication 2, dans lequel la pièce d'espacement (5), vue en coupe transversale transversalement à l'axe de rotation (D) de la deuxième fixation par vis, présente un pourtour extérieur polygonal et une portion rectiligne du pourtour extérieur polygonal est en contact par engagement par correspondance de formes avec la région de contact (7) de la partie inférieure de boîtier (1).

4. Boîtier selon l'une quelconque des revendications 1 à 3, dans lequel le contact et/ou la liaison de la pièce d'espacement (5) avec la partie inférieure de boîtier (1), qui empêche la rotation de la pièce d'espacement (5), est réalisé (e) au niveau d'une région de contact (7) et/ou d'une région de liaison de la partie inférieure de boîtier (1) qui s'étend à partir de la région de fixation (11) de la partie inférieure de boîtier (1) dans une direction qui s'étend le long de l'axe de rotation (D) de la première fixation par vis et le long de l'axe de rotation (D) de la deuxième fixation par vis.

5. Boîtier selon la revendication 4, dans lequel la région de contact (7) et/ou la région de liaison de la partie inférieure de boîtier (1), lorsque le couvercle de boîtier (3) est fermé, est disposée à une distance du couvercle de boîtier (3) de telle sorte qu'une fente (8) subsiste entre la partie inférieure de boîtier (1) et le couvercle de boîtier (3), dans laquelle se trouve un premier joint d'étanchéité (9) contre une pénétration de saleté, d'humidité et de liquide.

6. Boîtier selon l'une quelconque des revendications précédentes, dans lequel un deuxième joint d'étanchéité (13) se trouve entre la pièce d'espacement (5) et la région de fixation (11) de la partie inférieure de boîtier (1) de telle sorte qu'une pénétration de saleté, d'humidité et de liquide au niveau de la région de fixation (11) de la partie inférieure de boîtier (1) soit empêchée.

7. Boîtier selon l'une quelconque des revendications précédentes, dans lequel l'axe de rotation (D) de la première fixation par vis et l'axe de rotation (D) de la deuxième fixation par vis sont alignés l'un avec l'autre.

8. Boîtier selon la revendication 7, dans lequel la pièce d'espacement (5) présente un alésage fileté (15) traversant la pièce d'espacement (5) ou deux alésages filetés séparés, pour la réalisation de la première fixation par vis et pour la réalisation de la deuxième fixation par vis.

9. Boîtier selon l'une quelconque des revendications précédentes, dans lequel, par vissage, des moyens de fixation connectés l'un à l'autre de la première fixation par vis sont en outre collés l'un à l'autre dans une région filetée de la première fixation par vis, de sorte qu'une pénétration de saleté, d'humidité et de liquide dans le boîtier à travers la région filetée de la première fixation par vis soit empêchée.

10. Procédé pour recevoir des objets dans un boîtier, qui présente un espace de réception pour recevoir les objets, le boîtier comprenant, en tant que parties constitutives :
- une partie inférieure de boîtier (1),
- un couvercle de boîtier (3),
- au moins un joint d'étanchéité (9, 13) pour étanchéifier le boîtier vis-à-vis de la pénétration de saleté, d'humidité et de liquide,
- une pièce d'espacement (5) pour garantir une distance définie par les dimensions de la pièce d'espacement (5) entre la partie inférieure de boîtier et le couvercle de boîtier (3),
la pièce d'espacement (5)
- étant disposée à l'extérieur de l'espace de réception entre une région de fixation (4) du couvercle de boîtier (3) et une région de fixation (11) de la partie inférieure de boîtier (1), et garantissant de cette manière la distance définie entre la région de fixation (4) du couvercle de boîtier (3) et la région de fixation (11) de la partie inférieure de boîtier (1),
- étant fixée par le biais d'une première fixation par vis à la région de fixation (11) de la partie inférieure de boîtier (1),
- étant ou étant amenée en contact avec une région de contact (7) de la partie inférieure de boîtier (1) et/ou étant connectée à une région de liaison de la partie inférieure de boîtier (1), de telle sorte qu'une rotation de la pièce d'espacement (5) autour d'un axe de rotation (D) de la première fixation par vis et autour d'un axe de rotation (D) de la deuxième fixation par vis soit empêchée, et
- après l'introduction d'au moins un objet dans le boîtier et après une mise en place du couvercle de boîtier (3) sur la partie inférieure de boîtier, étant fixée par le biais d'une deuxième fixation par vis à la région de fixation (4) du couvercle de boîtier (3).
